# EUROPÄISCHE PATENTSCHRIFT

(11) **EP 2 308 722 B1**
(45) Veröffentlichungstag und Bekanntmachung des Hinweises auf die Patenterteilung: **23.05.2012**
(21) Anmeldenummer: 10186485.8
(22) Anmeldetag: 05.10.2010
(51) Int. Cl.: B60R 21/06

(54) **Laderaumabtrennung**
Storage area partition
Séparation d'espace de chargement

(30) Priorität: 07.10.2009 DE 102009048513
(43) Veröffentlichungstag der Anmeldung: 13.04.2011
(73) Patentinhaber: HS Genion GmbH, 82205 Gilching (DE)
(72) Erfinder: Asendorf, Sven, 82211, Herrsching (DE); Freyhann, Wolf-Dieter, 80634, München (DE); Schimmer, Walter, 85659, Forstern (DE)
(74) Vertreter: advotec.

(56) Entgegenhaltungen:
- DE-A1- 10 127 463
- DE-A1- 10 207 575
- DE-C1- 19 708 192
- DE-C1- 19 710 786
- DE-U1- 29 819 293
- GB-A- 2 321 436
- US-A1- 2002 067 047

## Beschreibung

Die Erfindung betrifft eine Sicherheitseinrichtung für einen Laderaum eines Kraftfahrzeuges mit den Merkmalen des Oberbegriffs des Patentanspruches 1.

Eine derartige Sicherheitseinrichtung ist aus der Druckschrift DE 101 27 463 A1 bekannt und umfasst ein Gehäuse, in dem eine Wickelwelle drehbar gelagert ist, ein Trennrollo, das auf die Wickelwelle aufwickelbar ist bzw. von der Wickelwelle abwickelbar ist und das an einem quer zur Wickelrichtung verlaufenden Rand mit der Wickelwelle und an seinem anderen quer zur Wickelrichtung verlaufenden Rand mit einem Ausziehspriegel verbunden ist. Der Ausziehspriegel ist in einem Himmelbereich des betreffenden Kraftfahrzeugs fixierbar. Des Weiteren umfasst die Sicherheitseinrichtung eine Auszugsbegrenzungseinrichtung für das Trennrollo, die in einem axialen Endabschnitt der Wickelwelle eine Steuerscheibe umfasst, die ein Schaltelement für eine Sperrklinke betätigt, die in einer Sperrstellung eine Drehung der Wickelwelle in Abwickelrichtung des Trennrollos sperrt und in einer Freigabestellung die Drehung der Wickelwelle in Abwickelrichtung des Trennrollos freigibt.

Aus der Druckschrift DE 102 07 575 A1 ist ebenfalls eine Sicherheitseinrichtung für ein Kraftfahrzeug bekannt, die ein Trennrollo umfasst, das auf eine Wickelwelle aufwickelbar bzw. von der Wickelwelle abwickelbar ist. Die Wickelwelle ist drehfest mit einer Rastscheibe verbunden, die mit einer zwischen einer Freilaufstellung und einer Sperrstellung verlagerbaren Sperrklinke zusammenwirkt.

Eine weitere, aus der Praxis bekannte derartige Sicherheitseinrichtung dient dazu, einen Fahrzeuginsassenraum von einem Laderaum des Kraftfahrzeuges abzutrennen. Durch die Abtrennung, die mittels eines Trennrollos der Sicherheitseinrichtung erfolgt, sollen Gegenstände, die im Laderaum transportiert werden, daran gehindert werden, in den Fahrzeuginsassenraum geschleudert zu werden. Das Trennrollo hält die Gegenstände zurück. Die bekannte Sicherheitseinrichtung umfasst ein Gehäuse, in dem eine Wickelwelle drehbar gelagert ist, auf der das Trennrollo aufwickelbar bzw. von der das Trennrollo abwickelbar ist. Das Trennrollo, das insbesondere netzartig ausgebildet sein kann, läuft durch einen Auslaufschlitz des Gehäuses, der sich parallel zur Längsachse der Wickelwelle erstreckt. Um das Trennrollo, das über einen Zugspriegel bzw. -bügel im Himmelbereich des betreffenden Kraftfahrzeuges fixierbar ist, unter Spannung zu halten, ist die Wickelwelle mittels einer Wickelfeder in Aufwickelrichtung vorgespannt. Beim Lösen des Zugspriegels von den im Himmelbereich angeordneten Befestigungsvorrichtungen wickelt sich damit das Trennrollo selbsttätig auf die Wickelwelle auf.

Die vorstehend beschriebene Sicherheitseinrichtung kann insbesondere hinter einem oberen Randbereich einer Rücklehne einer Rückbank des betreffenden Kraftfahrzeugs angeordnet sein. Hierzu können im Laderaum seitliche Aufnahmen für die Endbereiche des Gehäuses der Sicherheitseinrichtung angeordnet sein, in welches dieses einrastbar ist.

Insbesondere bei so genannten Kombi-Fahrzeugen kann durch Umlegen der Rückbank oder von deren Rücklehne der Laderaum vergrößert werden, so dass dieser nahezu bis an die Vordersitze des betreffenden Kraftfahrzeuges reicht. Um in diesem Fall die auf den Vordersitzen sitzenden Fahrzeuginsassen vor gegebenenfalls umherfliegenden Gegenständen aus dem Laderaum zu schützen, wird die Sicherheitseinrichtung in den bezogen auf die Fahrzeugausrichtung bugseitigen Bodenbereich des Laderaums bzw. den rückseitigen Bereich der umgelegten Rücksitzlehne verlagert. Von dort kann dann das Trennrollo in vertikaler Richtung nach oben bis zum Fahrzeuginnenhimmel ausgezogen und in Auszugsstellung fixiert werden. Für diesen Fall sind zusätzliche Fixiereinrichtungen für den Zugbügel des Trennrollos am Fahrzeuginnenhimmel angeordnet. Die Auszugslänge des Trennrollos bei umgelegter Rückbank ist größer als bei aufrecht angeordneter Rückbankrückenlehne. Daher muss bei der Anordnung, in der die Sicherheitseinrichtung hinter dem oberen Randbereich der aufrecht angeordneten Rückenlehne angeordnet ist, ein hinreichender Trennrollovorrat in dem Gehäuse vorgehalten werden, der bei umgelegter Rückbank zusätzlich von der Wickelwelle abwickelbar ist. Es hat sich nun als sicherheitsrelevantes Problem erwiesen, dass gegen das Trennrollo geschleuderte Gegenstände aus dem Laderaum Fahrzeuginsassen verletzen können, wenn der Trennrollovorrat durch die resultierende Krafteinwirkung unter Ausbildung eines in Richtung Fahrzeugbug weisenden Bauches von der Wickelwelle abgewickelt wird. Um dem entgegenzuwirken, wurde bisher vorgeschlagen, dass der Rand des Auslaufschlitzes des Gehäuses eine Zackenschiene aufweist, an der sich das netzartige Trennrollo verhaken kann und die so ein ungewolltes Abwickeln des Trennrollos von der Wickelwelle verhindert. Diese Maßnahme ist aber nur wirksam, wenn das Trennrollo aus einem weitmaschigen Netz gebildet ist.

Der Erfindung liegt die Aufgabe zugrunde, eine Sicherheitseinrichtung der einleitend genannten Gattung zu schaffen, die eine zuverlässige Auszugsbegrenzung für das Trennrollo unabhängig von der Materialbeschaffenheit desselben aufweist.

Diese Aufgabe ist erfindungsgemäß durch die Sicherheitseinrichtung mit dem Merkmal des Patentanspruches 1 gelöst.

Erfindungsgemäß wird mithin vorgeschlagen, dass die Auszugsbegrenzungseinrichtung in einem axialen Endabschnitt der Wickelwelle eine Steuerscheibe umfasst, die ein Schaltelement für eine Sperrklinke betätigt, die in einer Sperrstellung eine Drehung der Wickelwelle in Abwickelrichtung des Trennrollos sperrt und in einer Freigabestellung die Drehung der Wickelwelle in Abwickelrichtung des Trennrollos freigibt. Die Steuerscheibe, die sich zweckmäßigerweise mit der Wickelwelle dreht, steuert also die Stellung der Sperrklinke durch Betätigung des Schaltelements. Beispielsweise kann so in Abhängigkeit von der Anzahl der Umdrehungen der Wickelwelle beim Ausziehen des Trennrollos die Sperrklinke in ihre Sperrstellung geschaltet werden, so dass bei einer bestimmten Ausziehlänge des Trennrollos verhindert wird, dass der verbleibende Trennrollovorrat von der Wickelwelle abgewickelt wird. Damit kann auch verhindert werden, dass gegebenenfalls aus dem Laderaum gegen das Trennrollo geschleuderte Gegenstände das Trennrollo ausbeulen und auf Fahrzeuginsassen treffen.

Das Schaltelement der Auszugsbegrenzungseinrichtung ist bei der Sicherheitseinrichtung nach der Erfindung als Schaltrad ausgebildet, das in axialer Richtung nebeneinander eine Schaltzone, die mit der Sperrklinke zusammenwirkt, eine Verzahnungszone, die mit einer Verzahnung der Steuerscheibe zusammenwirkt, und eine Haltezone umfasst, die mit einem kreisförmigen Rand der Steuerscheibe zusammenwirkt. Die Verzahnungszone und die Haltzone wirken also mit der Steuerscheibe zusammen, wohingegen die Schaltzone mit der Sperrklinke zusammenwirkt. Die Haltezone und die Verzahnungszone, die untereinander drehfest und auch gegenüber der Schaltzone drehfest ausgebildet sind, legen durch Zusammenspiel mit der Steuerscheibe den mittels der Schaltzone ausgeführten Schaltvorgang zum Betätigen der Sperrklinke zwischen seiner Freigabestellung und seiner Sperrstellung fest.

Bei einer bevorzugten Ausführungsform der Sicherheitseinrichtung nach der Erfindung ist die Sperrklinke mittels einer Feder in Sperrstellung vorgespannt. Es ist damit ausreichend, dass das Schaltelement die Sperrklinke zum Schalten in die Freigabestellung gegen die Kraft der Feder versetzt bzw. verschwenkt. Ein Zurücksetzen in die Sperrstellung erfolgt dann allein durch Lösen der von dem Schaltelement auf die Steuerklinke ausgeübten Kraft, so dass die Steuerklinke selbsttätig in Sperrstellung schwenkt.

Zweckmäßigerweise ist die Sperrstellung der Sperrklinke durch eine gehäusefeste Abstützfläche definiert. An dieser Abstützfläche liegt die Sperrklinke also in Sperrstellung an.

Um auch im Falle einer unfallbedingten Zerstörung der Sicherheitseinrichtung zu gewährleisten, dass sich das Trennnetz ungewollt von der Wickelwelle abwickelt, umgreift die Sperrklinke bei einer vorteilhaften Ausführungsform der Sicherheitseinrichtung nach der Erfindung den betreffenden Endabschnitt der Wickelwelle, an welchem zum Zusammenwirken mit der Sperrklinke mindestens ein Rasthaken ausgebildet ist. Die Geometrie der Sperrklinke ist insbesondere so an die Geometrie des Gehäuses angepasst, dass die Sperrklinke nicht um die Achse der Wickelwelle rotieren kann, sondern vielmehr durch Anlage an den Gehäusewänden drehfest gegenüber dem Gehäuse gehalten wird.

Beispielsweise weist der kreisförmige Rand der Steuerscheibe eine Unterbrechung auf, in deren Bereich die Verzahnung der Steuerscheibe angeordnet ist. Die Verzahnung ist in axialer Richtung der Steuerscheibe gegenüber deren kreisförmigen Rand versetzt. Bei einem Wickelvorgang gleitet also der kreisförmige Rand an der Haltezone des Schaltrads, wobei das Schaltrad keine Rotation ausführt. Bei Erreichen der Unterbrechung greift die Verzahnung der Steuerscheibe in die Verzahnungszone des Schaltrads ein, so dass dieses entsprechend der gewählten Übersetzung gedreht wird. Sobald bei einem Weiterdrehen der Steuerscheibe der kreisförmige Rand wieder an der Haltezone des Schaltelements anliegt, wird das Schaltrad erneut festgehalten. Pro Umdrehung der Steuerscheibe erfolgt damit eine Rotation des Schaltrads, die durch die im Bereich der Unterbrechung angeordnete Steuerverzahnung ausgelöst wird. Bei Erreichen der für die jeweilige Position der Sicherheitseinrichtung in dem betreffenden Kraftfahrzeug gewählten maximalen Auszugslänge wurde die Schaltzone des Schaltrades soweit gedreht, dass die auf die Sperrklinke wirkende Kraft gelöst wird und die Sperrklinke in ihre Sperrstellung schalten kann. Damit wird ein weiteres Ausziehen des Trennrollos verhindert.

Die Haltezone des Schaltrades ist beispielsweise ein Kreiselement mit Ausklinkungen, deren Ränder einen Krümmungsradius haben, der dem Krümmungsradius des kreisförmigen Randes der Steuerscheibe entspricht. Im Bereich der Ausklinkungen liegt der kreisförmige Rand der Steuerscheibe während des Halteschritts an. In einem Stellschritt greift die Verzahnung der Steuerscheibe in die Verzahnungszone des Schaltrads ein.

Die Schaltzone des Schaltrades ist vorzugsweise ein Kreiselement mit einer Abflachung, wobei die Sperrklinke in ihrer Sperrstellung gegen die Abflachung schwenkt und sich in ihrer Freigabestellung an der kreisbogenförmigen Randfläche der Schaltzone abstützt.

Um die Auszugsbegrenzungseinrichtung der Sicherheitseinrichtung nach der Erfindung deaktivieren bzw. aktivieren zu können, ist vorzugsweise eine Schaltwelle vorgesehen, an der ein Nocken ausgebildet ist, der die Sperrklinke in Freigabestellung hält, wenn ein Aktivierungsschieber unbetätigt ist.

Der Aktivierungsschieber hat beispielsweise einen Zahnstangenabschnitt, der mit einer Verzahnung der Schaltwelle zusammenwirkt. Ferner kann der Aktivierungsschieber mittels einer Feder in die Aktivierungsstellung vorgespannt sein. Bei Einbau der Sicherheitseinrichtung am hinteren oberen Rand der Rückbankrückenlehne des betreffenden Kraftfahrzeuges wird der Aktivierungsdrücker durch Anlage an einem Gegenlager automatisch gedrückt, so dass seine Aktivierungsstellung erreicht wird.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel einer Sicherheitseinrichtung nach der Erfindung ist in der Zeichnung schematisch vereinfacht dargestellt und wird in der nachfolgenden Beschreibung näher erläutert. Es zeigt
- **Fig.1**: eine stark schematisierte Seitenansicht eines Heckbereich eines Kraftfahr- zeugs bei aufrecht angeordneter Rückbankrückenlehne;
- **Fig. 2**: eine Figur 1 entsprechende Ansicht, jedoch bei umgelegter Rückbankrücken- lehne;
- **Fig. 3**: eine perspektivische Ansicht eines seitlichen Endbereichs einer Trennrollo- mechanik;
- **Fig. 4**: eine zweite perspektivische Ansicht des Endbereichs der Trennrollomecha- nik;
- **Fig. 5**: einen ersten Schnitt durch die Sicherheitseinrichtung im Bereich eines Halteriegels;
- **Fig. 6**: einen zweiten Schnitt durch die Sicherheitseinrichtung im Bereich eines Aktivierungsschiebers zur Aktivierung und Deaktivierung einer Auszugsbe- grenzungseinrichtung;
- **Fig. 7**: einen weiteren Schnitt durch die Sicherheitseinrichtung im Bereich eines Nockens, der mittels des Aktivierungsschiebers betätigbar ist;
- **Fig. 8**: einen weiteren Schnitt durch die Sicherheitseinrichtung, der das Zusammen- wirken eines Schaltrads und einer Sperrklinke der Auszugsbegrenzungsein- richtung darstellt; und
- **Fig. 9**: einen weiteren Schnitt durch die Sicherheitseinrichtung, der das Zusammen- wirken zwischen dem Schaltrad und der Steuerscheibe einer Wickelwelle dar- stellt.

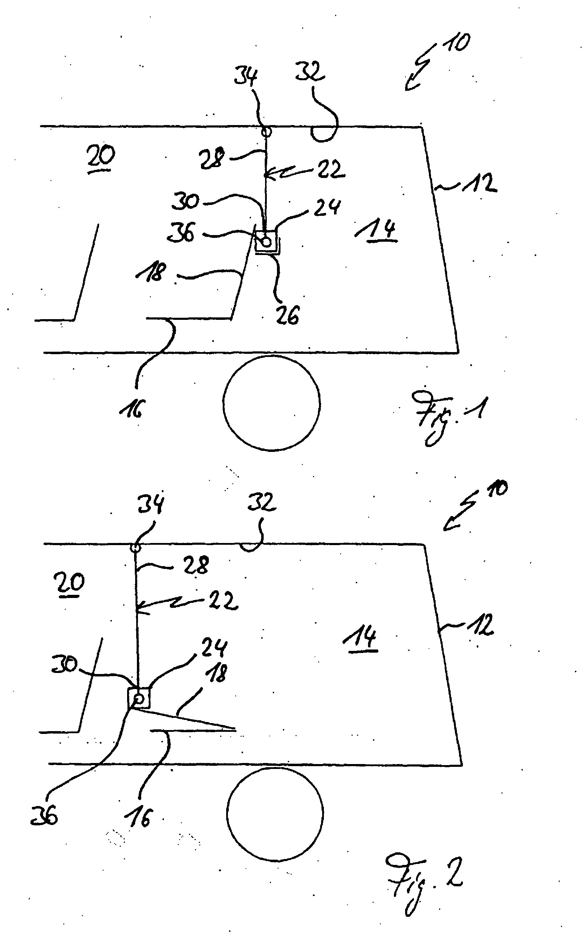

In den Figuren 1 und 2 ist ein Kraftfahrzeug 10 dargestellt, das als so genanntes Kombi-Fahrzeug ausgebildet ist und eine heckseitig von einer Ladeklappe 12 begrenzten Laderaum 14 aufweist. Das Kraftfahrzeug 10 umfasst eine Rückbank 16, die mit einer umlegbaren Rückenlehne 18 ausgestattet ist. Die Rückenlehne 18 ist damit zwischen einer in Figur 1 dargestellten, aufrechten Stellung, in der sie den Laderaum 14 frontseitig begrenzt, und einer in Figur 2 dargestellten, umgeklappten Stellung verschwenkbar, in der der Laderaum 14 nach vorne erweitert ist und in der die Rückseite der Rückenlehne 18 in einen bugseitigen Bereich des Laderaums 14 einen Laderaumbodenabschnitt bildet.

Um den Laderaum 14 von einem Fahrzeuginsassenraum 20 zu trennen, weist das Kraftfahrzeug 10 eine Sicherheitseinrichtung 22 auf, durch die Insassen des Fahrzeuginsassenraums 20 vor Gegenständen geschützt sind, die gegebenenfalls in Unfallsituationen oder dergleichen nach vorne geschleudert werden. Der Sicherheitseinrichtung 22 ist eine erste, in Figur 1 dargestellte Einbausituation und eine in Figur 2 dargestellte, zweite Einbausituation zugeordnet. In der ersten Einbausituation ist die Sicherheitseinrichtung 22 mit einem Gehäuse 24 an die Rückseite der Rückenlehne 18 der Rückbank 16 angrenzend in seitlichen karosseriefesten Aufnahmen 26 gelagert. In der zweiten, in Figur 2 dargestellten Einbausituation ist das Gehäuse 24 der Sicherheitseinrichtung 22 zusammen mit der Rückenlehne 18 nach vorne unten verschwenkt. In beiden Einbausituationen ist ein Trennnetz 28 durch einen Auslaufschlitz 30 des Gehäuses 24 zumindest annähernd in vertikaler Richtung nach oben bis an einen Innenhimmel 32 des Fahrzeuginnenraums geführt und dort über einen Ausziehspriegel 34 fixiert. Die Auszugslänge des Trennnetzes 28 ist bei der in Figur 2 dargestellten Einbausituation größer als bei der in Figur 1 dargestellten, ersten Einbausituation, in welcher ein Trennnetzvorrat auf einer in dem Gehäuse 24 angeordneten Wickelwelle 36 vorgehalten wird, auf der das Trennnetz 28 aufwickelbar bzw. von der das Trennnetz 28 abwickelbar ist und die in Aufwickelrichtung des Trennnetzes 28 mittels einer nicht näher dargestellten Wickelfeder vorgespannt ist.

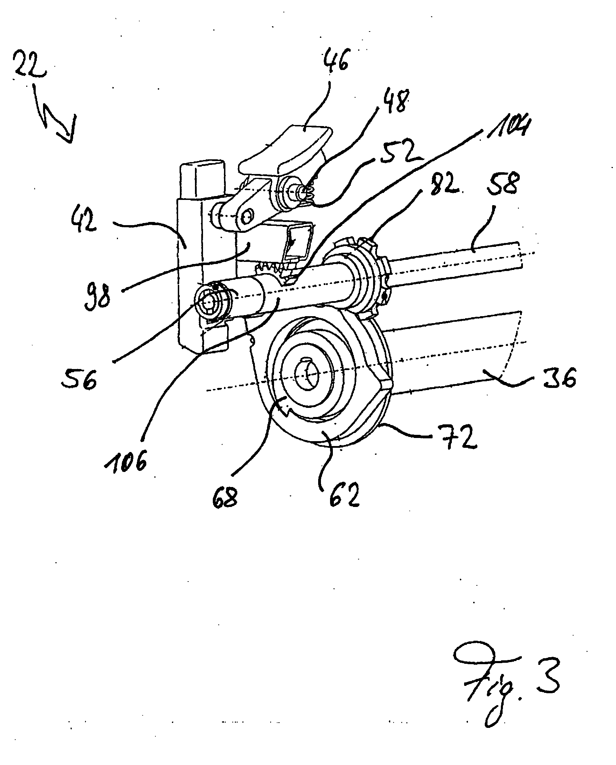

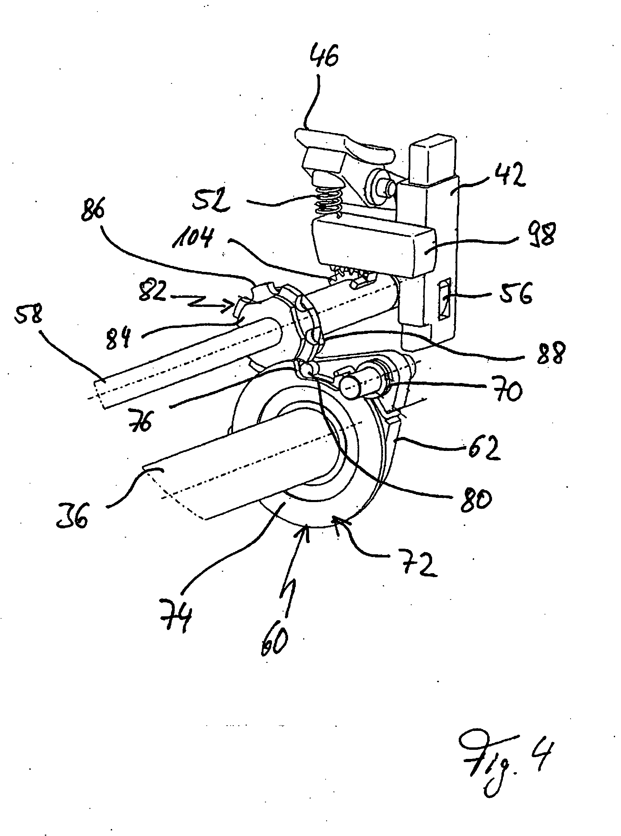

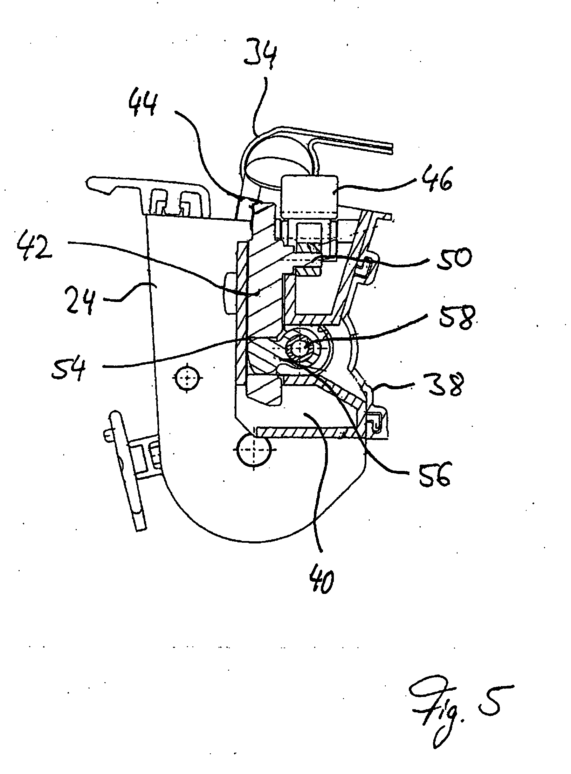

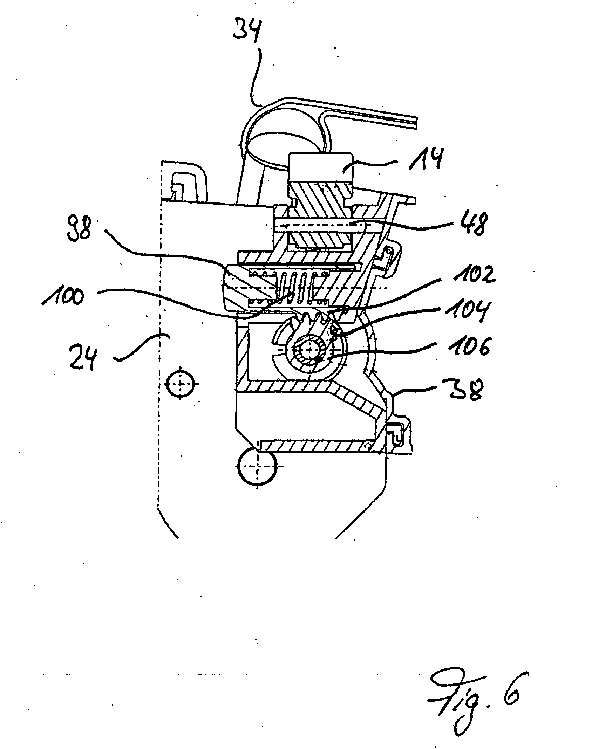

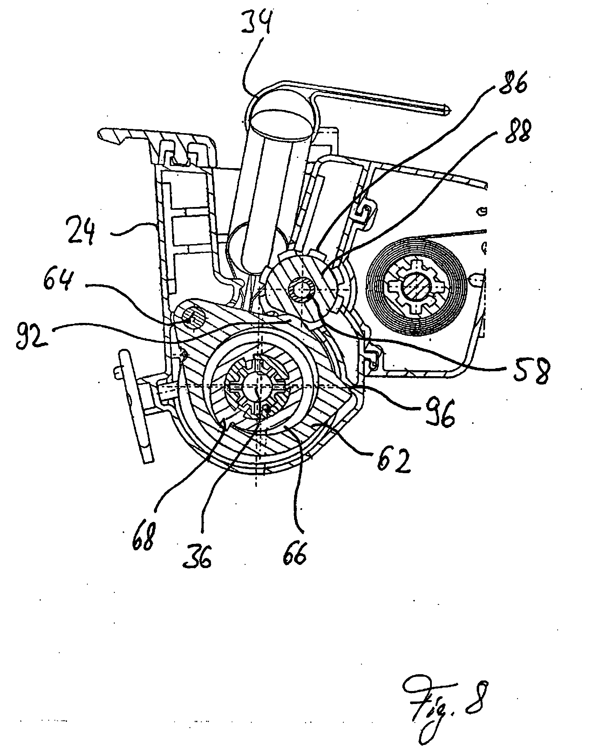

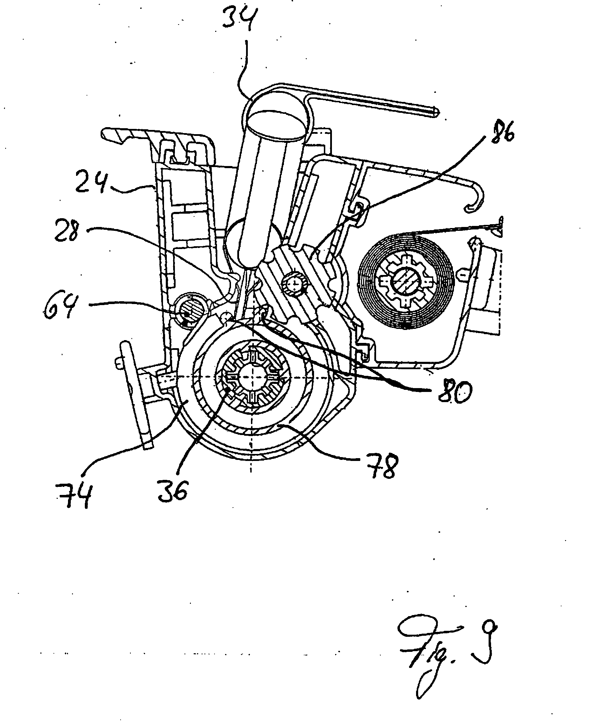

Die Sicherheitseinrichtung 22, die anhand der Figuren 3 bis 9 detailliert dargestellt ist, umfasst neben dem Trennnetz 28, das in einen in Fahrzeugquerrichtung verlaufenden Endbereich zu einer Schlaufe vernäht ist, die von der Wickelwelle 36 durchgriffen ist und zur Verdrehsicherung mittels nicht dargestellter Niete mit der Wickelwelle 36 verbunden ist, ein Haltsystem zur Fixierung an den Aufnahmen 26, die fahrzeugfest ausgebildet sind. Dieses Haltesystem ist bezogen auf eine Fahrzeuglängsmittelebene beidseits jeweils in einem Endabschnitt 38 des Gehäuses 24 ausgebildet und umfasst eine zumindest teilweise keilförmige, sich in Fahrzeuglängsrichtung erstreckende Gehäuseausnehmung 40 für eine korrespondierend ausgebildeten Zapfen der fahrzeugfesten Aufnahme 26. Zur verliersicheren Anbindung an den Zapfen ist ein in vertikaler Richtung verschiebbarer Halteriegel 42 in dem Gehäuseendabschnitt 38 gelagert, an dessen Oberseite 44 eine farbliche Markierung angeordnet sein kann, die eine korrekte Befestigung des Gehäuses 24 an den Aufnahmen 26 des Kraftfahrzeugs 10 anzeigt. Die Betätigung des Halteriegels 42 erfolgt mittels einer Taste 46, die an dem Gehäuseendbereich 38 mittels eines Stifts 48 schwenkbar gelagert ist und über einen Stift 50 mit dem Halteriegel 42 verbunden ist. Ein manuelles Drücken der Taste 46, die mittels einer Feder 52 in einer Ruhestellung vorgespannt ist, führt zu einer Betätigung, d.h. einem Verschieben des schiebartigen Halteriegels 42 in vertikaler Richtung, so dass der Zapfen der Aufnahme 28 aus der Gehäuseausnehmung 40 gezogen werden kann. Beim Montieren des Gehäuses 24 an den Aufnahmen 26 rastet der Halteriegel 42 selbsttätig in eine an der Oberseite des Zapfens der Aufnahme 26 ausgebildete Ausnehmung ein.

Des Weiteren ist der Halteriegel 42 mit einer Ausnehmung 54 versehen, in die ein Kugelkopf eines Hebels 56 eingreift. Der Hebel 56 sitzt drehfest auf einen Verbindungsrohr 58, das zur Synchronisierung der bezogen auf die Fahrzeuglängsmittelebene beidseits angeordneten Verriegelungseinrichtungen dient. Eine Entriegelung der Sicherheitseinrichtung 22 von den Aufnahmen 26 kann damit durch Drücken der der bezogen auf die Vorwärtsfahrtrichtung links angeordneten Taste 46 oder der bezogen auf die Vorwärtsfahrtrichtung rechts angeordneten Taste 46 oder durch Drücken beider Tasten 46 erfolgen, um beidseits eine Entriegelung zu erreichen. Gegebenenfalls ist es auch ausreichend, nur eine Entriegelungstaste 46 an einem der beiden Gehäuseendabschnitte vorzusehen.

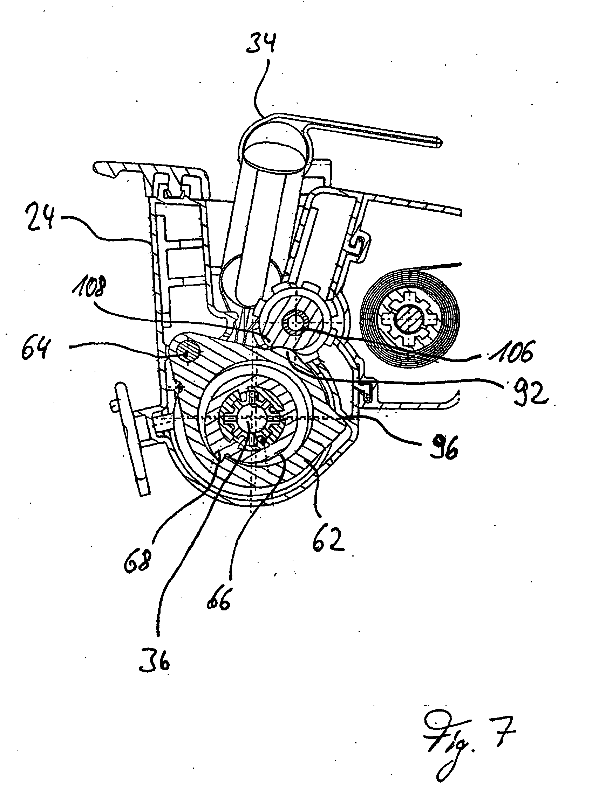

Um die Auszugslänge des Trennnetzes in der in Figur 1 dargestellten ersten Einbausituation zu begrenzen, weist die Sicherheitseinrichtung 22 eine Ausziehbegrenzungseinrichtung 60 auf, die eine Sperrklinke 62 umfasst, die über eine Achse 64 an dem Gehäuseendabschnitt 38 schwenkbar gelagert ist und einen im weitesten Sinne kreisförmigen Klinkenausschnitt 66 aufweist, in dem die Wickelwelle 36 mit ihrem Endabschnitt eingreift, an dem ein Rasthaken 68 ausgebildet ist. Die Sperrklinke 62 ist mittels einer Schenkelfeder 70 in eine beispielsweise in Figur 7 dargestellte Sperrstellung vorgespannt, in der ein Abwickeln des Trennnetzes 28 von der Wickelwelle 36 gesperrt ist. Wenn die Sperrklinke 62 entgegen der Wirkung der Schenkelfeder 70, d.h. in Figur 7 im Uhrzeigersinn um die Achse 64 geschwenkt wird, wird deren Freigabestellung eingestellt.

Benachbart zu dem den Rasthaken 68 bildenden Element sitzt auf der Wickelwelle 36 eine so genannte Steuerscheibe 72, die zwei in axialer Richtung zueinander versetzte Funktionszonen aufweist, von denen eine von einem flanschartigen Scheibenelement 74 gebildet ist, das eine sich in Umfangsrichtung erstreckende Unterbrechung bzw. Ausnehmung 76 aufweist, und die andere ein Zahnring 78 ist, der zwei Zähne 80 aufweist, die im Bereich der Ausnehmung 76 des Scheibenelements 74 angeordnet sind.

Die Steuerscheibe 72, die drehfest mit der Wickelwelle 36 verbunden ist, wirkt mit einem ein Schaltrad bildenden Schaltelement 82 zusammen, das drehbar auf dem Verbindungsrohr 78 gelagert ist und drei in axialer Richtung des Verbindungsrohrs 58 nebeneinander liegende Funktionsbereiche hat, nämlich eine erste, eine Haltezone 84 darstellende Funktionszone, eine zweite, eine Verzahnungszone 86 darstellende Funktionszone und eine dritte, eine Schaltzone 88 darstellende Funktionszone, wobei die ersten beiden Funktionszonen 84 und 86 mit der Steuerscheibe 72 zusammenwirken und die dritte Funktionszone 88 mit der Sperrklinke 62 zusammenwirkt. Die die Haltezone 84 bildende Funktionszone kann als Kreiselement mit Ausklinkungen 90 aufgefasst werden und wirkt mit dem Scheibenelement 74 der Steuerscheibe 72 derart zusammen, dass bei einer Drehung der Steuerscheibe 72 die Randfläche von deren Scheibenelement 74 im Bereich einer Ausklinkung 90 mit einer korrespondierenden Randfläche der Haltezone 84 in Kontakt steht, und zwar solange, bis die Ausnehmung 76 die Haltezone 84 erreicht. Sobald dies der Fall ist, greifen die Zähne 80 des Zahnrings 78 der Steuerscheibe 72 in eine Verzahnung 90 der Verzahnungszone 86 des Schaltrads 84 ein, so dass das Schaltrad 84 gedreht wird. Sobald die Zähne 80 des Zahnrings 78 wieder außer Eingriff von der Verzahnungszone 86 des Schaltelements 82 stehen, liegt die kreis- bzw. bogenförmige Randfläche des Scheibenelements 74 der Steuerscheibe 72 wieder an einer von einer Ausklinkung 90 der Haltezone 84 gebildeten Randfläche des Schaltelements 82 an, so dass diese wieder in Position gehalten und an einer Drehung um die Achse des Verbindungsrohrs 58 gehindert wird.

Die Schaltzone 88 des Schaltelements 22 ist als Kreissegment ausgebildet, d.h. als Kreiselement mit einer Randabflachung. Die Randfläche der Schaltzone 88 dient als Abstützfläche für einen nockenartigen Vorsprung 92 der Sperrklinke 62. So lange sich der nockenartige Vorsprung der Sperrklinke 62 an der bogenförmige Randfläche der Schaltzone 88 des Schaltelements 82 abstützt, befindet sich die Steuerklinke 62 in einer gegen die Kraft der Schenkelfeder 70 gerichteten Freigabestellung, in der sich die Wickelwelle 36 frei drehen kann. Sobald das Schaltelement 82 soweit gedreht ist, dass der nockenartige Vorsprung 92 gegen die Abflachung 94 der Schaltzone 88 geschwenkt ist, hat die Steuerklinke 62 ihre Sperrstellung eingenommen, in der der Rasthaken 68 im Zusammenwirken mit der Sperrklinke 62 ein Verdrehen der Wickelwelle 36 in Abwickelrichtung des Trennnetzes 28 sperrt. In dieser Sperrstellung stützt sich die Sperrklinke 62 an einer gehäusefesten Gegenfläche 96 des Gehäuseendabschnitts 38 ab.

Die Anzahl der Ausklinkungen 90 der Haltezone 84 des Schaltelements 82 entspricht der Anzahl der gewünschten Umdrehungen der Wickelwelle 36, ab der das teilausgezogene Trennnetz 28 bei der in Figur 1 dargestellten ersten Einbausituation durch die Sperrklinke 62 an einem Weiterabwickeln des Trennnetzes 28 gehindert wird. Bei vollständig aufgewickelten Trennnetz 28 hat das Schaltelement 82 gegenüber der Sperrklinke 62 eine Drehstellung, in der die Sperrklinke 62 an der kreisbogenförmigen Randfläche der Schaltzone 88 anliegt und damit in Freigabestellung gehalten wird.

Beim Abwickeln des Trennnetzes 28 von der Wickelwelle 36 wird das Schaltelement 82 bei jeder Umdrehung durch den Eingriff der Zähne 80 in die Verzahnungszone 86 einen bestimmten Betrag gedreht. Nach einer bestimmten Anzahl an Umdrehungen der Wickelwelle 36 ist die in der Zeichnung dargestellte Drehstellung des Schaltelementes 82 erreicht, so dass die Sperrklinke 62 in ihre Sperrstellung schaltet, in der sie sich an der Gegenfläche 96 des Gehäuseendabschnitts 38 abstützt und sich die Wickelwelle 36 über die Sperrklinke 62 an dem Gehäuseendabschnitt 38 abstützt. Die maximale Abrolllänge wird durch die Geometrie der Wickelwelle 36, der Steuerscheibe 72 und des Schaltelements 82 bestimmt.

Die Steuerung, ob das Trennnetz 28 nur teilweise (erste Einbausituation) oder vollständig (zweite Einbausituation) von der Wickelwelle 36 abwickelbar ist, wird durch einen Aktivierungsschieber 98 bestimmt, der mittels einer Feder 100 in eine Deaktivierungsstellung vorgespannt ist und dessen Achse in einer vertikalen Projektion rechtwinkelig zur Achse der Wickelwelle 36 ausgerichtet ist. Der Aktivierungsschieber weist eine Verzahnungsabschnitt 102 auf, der mit einer Verzahnung 104 einer Schaltwelle 106 in Eingriff steht, die drehbar auf dem Verbindungsrohr 58 gelagert ist und in einem von der Verzahnung 104 beabstandeten Bereich einen Nocken 108 aufweist, der ebenfalls mit dem nockenartigen Vorsprung 92 der Sperrklinke 62 zusammenwirkt. Im entspannten Zustand der Feder 100, d.h. im ausgefahrenen Zustand des Aktivierungsschiebers 98 drückt der Nocken 108 die Sperrklinke 62 entgegen der Kraft der Schenkelfeder 70 in ihre Freigabestellung. Wenn der Aktivierungsschieber 98 gedrückt ist, was in der ersten der Einbausituation an der Brüstung der Rückbank 16 durch Anliegen der Stirnfläche an einer fahrzeugfesten Gegenfläche der Fall ist, wird die Sperrklinke 62 gegenüber dem Nocken 108 freigegeben, so dass deren Steuerung hinsichtlich Freigabestellung oder Sperrstellung in Abhängigkeit von der Drehstellung des Schaltelements 82 erfolgt. Dies bedeutet also, dass, solange die Sicherheitseinrichtung 82 nicht an den Aufnahmen 26 montiert ist, der Aktivierungsschieber 98 mittels der Feder 100 gegen einen an dem Gehäuseendabschnitt 38 ausgebildeten Anschlag nach außen gedrückt wird. Dadurch wird die Sperrklinke 62 durch den Kopfkreis des Nockens 108 in seiner Freigabestellung gehalten. Die Ausziehbegrenzungseinrichtung 60 ist damit außer Funktion gesetzt. Das Trennnetz 28 kann damit vollständig ausgezogen werden.

Wenn die Sicherheitseinrichtung 22 an den Aufnahmen 26, d.h. in der ersten Einbausituation verriegelt wird, dreht der Nocken 108 von der Sperrklinke 62 ab, so dass die Steuerung der Sperrklinke 62 von dem Schaltelement 82 übernommen wird.

### Bezugszeichenliste

- 10: Kraftfahrzeug
- 12: Heckklappe
- 14: Laderaum
- 16: Rückbank
- 18: Rückenlehne
- 20: Fahrzeuginsassen
- 22: Sicherheitseinrichtung
- 24: Gehäuse
- 26: Aufnahmen
- 28: Trennnetz
- 30: Auslaufschlitz
- 32: Innenhimmel
- 34: Ausziehspriegel
- 36: Wickelwelle
- 38: Endabschnitt
- 40: Gehäuseausnehmung
- 42: Halteriegel
- 44: Oberseite
- 46: Taste
- 48: Stift
- 50: Stift
- 52: Feder
- 54: Ausnehmung
- 56: Hebel
- 58: Verbindungsrohr
- 60: Ausziehbegrenzungseinrichtung
- 62: Sperrklinke
- 64: Achse
- 66: Klinkenausschnitt
- 68: Rasthaken
- 70: Schenkelfeder
- 72: Steuerscheibe
- 74: Scheibenelement
- 76: Ausnehmung
- 78: Zahnring
- 80: Zähne
- 82: Schaltelement
- 84: Haltezone
- 86: Verzahnungszone
- 88: Schaltzone
- 90: Ausklinkung
- 92: Vorsprung
- 94: Abflachung
- 96: Gegenfläche
- 98: Aktivierungsschieber
- 100: Feder
- 102: Verzahnungsabschnitt
- 104: Verzahnung
- 106: Schaltwelle
- 108: Nocken

## Patentansprüche

1. Sicherheitseinrichtung für einen Laderaum (14) eines Kraftfahrzeugs, umfassend ein Gehäuse (24), in dem eine Wickelwelle (36) drehbar gelagert ist, ein Trennrollo (28), das auf die Wickelwelle (36) aufwickelbar bzw. von der Wickelwelle (36) abwickelbar ist und das an einem quer zur Wickelrichtung verlaufenden Rand mit der Wickelwelle (36) und an seinem anderen quer zur Wickelrichtung verlaufenden Rand mit einem Ausziehspriegel (34) verbunden ist, der in einem Himmelbereich (32) des betreffenden Kraftfahrzeugs fixierbar ist, sowie eine Auszugsbegrenzungseinrichtung (60) für das Trennrollo (28), wobei die Auszugsbegrenzungseinrichtung (60) in mindestens einem axialen Endabschnitt der Wickelwelle (36) eine Steuerscheibe (72) umfasst, die ein Schaltelement (82) für eine Sperrklinke (62) betätigt, die in einer Sperrstellung eine Drehung der Wickelwelle (36) in Abwickelrichtung des Trennrollos (28) sperrt und in einer Freigabestellung die Drehung der Wickelwelle (36) in Abwickelrichtung des Trennrollos (28) freigibt, **dadurch gekennzeichnet, dass** das Schaltelement (82) als Schaltrad ausgebildet ist, das in axialer Richtung nebeneinander eine Schaltzone (88), die mit der Sperrklinke (62) zusammenwirkt, eine Verzahnungszone (86), die mit einer Verzahnung (80) der Steuerscheibe (72) zusammenwirkt, und eine Haltezone (84) umfasst, die mit einer kreisbogenförmigen Randfläche der Steuerscheibe (72) zusammenwirkt.

2. Sicherheitseinrichtung nach Anspruch 1, **dadurch gekennzeichnet, dass** die Sperrklinke (62) mittels einer Feder (70) in Sperrstellung vorgespannt ist.

3. Sicherheitseinrichtung nach Anspruch 1 oder 2, **dadurch gekennzeichnet, dass** die Sperrklinke (62) in Sperrstellung an einer gehäusefesten Abstützfläche (96) anliegt.

4. Sicherheitseinrichtung nach einem der Ansprüche 1 bis 3, **dadurch gekennzeichnet, dass** die Sperrklinke (62) den axialen Endabschnitt der Wickelwelle (36) umgreift, an dem zum Zusammenwirken mit der Sperrklinke (52) mindestens ein Rasthaken (68) ausgebildet ist.

5. Sicherheitseinrichtung nach Anspruch 1, **dadurch gekennzeichnet, dass** die kreisbogenförmige Randfläche der Steuerscheibe (72) eine Unterbrechung (76) aufweist, in deren Bereich die axial gegenüber der kreisbogenförmigen Randfläche versetzte Verzahnung (80) der Steuerscheibe (72) angeordnet ist.

6. Sicherheitseinrichtung nach einem der Ansprüche 1 oder 6, **dadurch gekennzeichnet, dass** die Haltezone (84) des Schaltrads (82) ein Kreiselement mit Ausklinkungen (90) ist.

7. Sicherheitseinrichtung nach Anspruch 1, **dadurch gekennzeichnet, dass** die Schaltzone (88) ein Kreiselement mit einer Abflachung (94) ist, wobei sich die Sperrklinke in ihrer Freigabestellung an einer kreisbogenförmigen Randfläche der Schaltzone (88) abstützt und in ihrer Sperrstellung gegen die Abflachung geschwenkt ist.

8. Sicherheitseinrichtung nach einem der Ansprüche 1 bis 7, **gekennzeichnet durch** eine Schaltwelle (106), an der ein Nocken (108) ausgebildet ist, der die Sperrklinke (62) in Freigabestellung hält, wenn ein Aktivierungselement (98) unbetätigt ist.

9. Sicherheitseinrichtung nach Anspruch 8, **dadurch gekennzeichnet, dass** das Aktivierungselement (98) einen Verzahnungsabschnitt (102) hat, der mit einer Verzahnung (104) einer Schaltwelle (106) in Eingriff steht.

## Claims

1. Safety device for a storage area (14) of a motor vehicle, comprising a housing (24), in which a winding shaft (36) is rotatably mounted, a separating roller blind (28) which can be wound up onto the winding shaft (36) or can be unwound from the winding shaft (36) and which is connected at an edge running transversely with respect to the winding direction to the winding shaft (36) and at the other edge thereof running transversely with respect to the winding direction to an extension bow (34), which can be fixed in a rooflining region (32) of the motor vehicle in question, and also an extension limiting device (60) for the separating roller blind (28), wherein the extension limiting device (60) comprises a disc cam (72) in at least one axial end section of the winding shaft (36), said disc cam actuating a switching element (82) for a pawl (62) which, in a blocking position, blocks rotation of the winding shaft (36) in the unwinding direction of the separating roller blind (28) and, in a release position, releases the rotation of the winding shaft (36) in the unwinding direction of the separating roller blind (28), **characterized in that** the switching element (82) is designed as a switching wheel which comprises, in the axial direction next to one another, a switching zone (88) which interacts with the pawl (62), a toothing zone (86) which interacts with a toothing (80) of the disc cam (72), and a retaining zone (84) which interacts with a circular-arc-shaped edge surface of the disc cam (72).

2. Safety device according to Claim 1, **characterized in that** the pawl (62) is prestressed in the blocking position by means of a spring (70).

3. Safety device according to Claim 1 or 2, **characterized in that**, in the blocking position, the pawl (62) bears against a supporting surface (96) on the housing.

4. Safety device according to one of Claims 1 to 3, **characterized in that** the pawl (62) engages around the axial end section of the winding shaft (36), on which end section at least one latching hook (68) is formed for interaction with the pawl (62).

5. Safety device according to Claim 1, **characterized in that** the circular-arc-shaped edge surface of the disc cam (72) has an interruption (76), in the region of which the toothing (80) of the disc cam (72), which toothing is offset axially in relation to the circular-arc-shaped edge surface, is arranged.

6. Safety device according to either of Claims 1 and 6, **characterized in that** the retaining zone (84) of the switching wheel (82) is a circular element with notches (90).

7. Safety device according to Claim 1, **characterized in that** the switching zone (88) is a circular element with a flattened portion (94), wherein the pawl, in the release position thereof, is supported on a circular-arc-shaped edge surface of the switching zone (88) and, in the blocking position thereof, is pivoted towards the flattened portion.

8. Safety device according to one of Claims 1 to 7, **characterized by** a switching shaft (106) on which a cam (108) is formed, the cam retaining the pawl (62) in the release position if an activating element (98) is unactuated.

9. Safety device according to Claim 8, **characterized in that** the activating element (98) has a toothing section (102) which is in engagement with a toothing (104) of a switching shaft (106).

## Revendications

1. Dispositif de sécurité pour un espace de chargement (14) d'un véhicule automobile, comprenant un boîtier (24), dans lequel est monté à rotation un arbre d'enroulement (36), un store de séparation (28) qui peut être enroulé sur l'arbre d'enroulement (36) ou déroulé de l'arbre d'enroulement (36), et qui est relié au niveau d'un bord s'étendant transversalement à la direction d'enroulement à l'arbre d'enroulement (36) et au niveau de son autre bord s'étendant transversalement à la direction d'enroulement à un arceau d'extraction (34) qui peut être fixé dans une région du plafond (32) du véhicule automobile concerné, ainsi qu'un dispositif de limitation d'extraction (60) pour le store de séparation (28), le dispositif de limitation d'extraction (60) comprenant dans au moins une portion d'extrémité axiale de l'arbre d'enroulement (36) un disque de commande (72) qui actionne un élément de commutation (82) pour un cliquet d'arrêt (62) qui, dans une position de blocage, bloque la rotation de l'arbre d'enroulement (36) dans la direction du déroulement du store de séparation (28) et qui, dans une position de libération, permet la rotation de l'arbre d'enroulement (36) dans la direction du déroulement du store de séparation (28), **caractérisé en ce que** l'élément de commutation (82) est réalisé sous forme de roue de commutation qui comprend, les uns à côté des autres dans la direction axiale, une zone de commutation (88), qui coopère avec le cliquet d'arrêt (62), une zone de denture (86) qui coopère avec une denture (80) du disque de commande (72), et une zone de retenue (84) qui coopère avec une surface de bord du disque de commande (72) en forme d'arc de cercle.

2. Dispositif de sécurité selon la revendication 1, **caractérisé en ce que** le cliquet d'arrêt (62) est précontraint au moyen d'un ressort (70) dans la position de blocage.

3. Dispositif de sécurité selon la revendication 1 ou 2, **caractérisé en ce que** le cliquet d'arrêt (62) s'applique dans la position de blocage contre une surface de support (96) fixée au boîtier.

4. Dispositif de sécurité selon l'une quelconque des revendications 1 à 3, **caractérisé en ce que** le cliquet d'arrêt (62) vient en prise autour de la portion d'extrémité axiale de l'arbre d'enroulement (36), sur laquelle est réalisé au moins un crochet d'encliquetage (68) destiné à coopérer avec le cliquet d'arrêt (62).

5. Dispositif de sécurité selon la revendication 1, **caractérisé en ce que** la surface de bord en forme d'arc de cercle du disque de commande (72) présente un orifice (76) dans la région duquel est disposée la denture (80) du disque de commande (72), décalée axialement par rapport à la surface de bord en forme d'arc de cercle.

6. Dispositif de sécurité selon l'une quelconque des revendications 1 ou 6, **caractérisé en ce que** la zone de retenue (84) de la roue de commutation (82) est un élément circulaire avec des encoches (90).

7. Dispositif de sécurité selon la revendication 1, **caractérisé en ce que** la zone de commutation (88) est un élément circulaire avec un méplat (94), le cliquet d'arrêt s'appuyant dans sa position de libération contre une surface de bord en forme d'arc de cercle de la zone de commutation (88) et étant pivotée contre le méplat dans sa position de blocage.

8. Dispositif de sécurité selon l'une quelconque des revendications 1 à 7, **caractérisé par** un arbre de commutation (106) sur lequel est réalisée une came (108), qui retient le cliquet d'arrêt (62) dans la position de libération lorsqu'un élément d'activation (98) n'est pas activé.

9. Dispositif de sécurité selon la revendication 8, **caractérisé en ce que** l'élément d'activation (98) a une portion de denture (102) qui est en prise avec une denture (104) d'un arbre de commutation (106).
